# EUROPÄISCHE PATENTSCHRIFT

(11) **EP 3 527 866 B1**
(45) Veröffentlichungstag und Bekanntmachung des Hinweises auf die Patenterteilung: **12.01.2022**
(21) Anmeldenummer: 19155348.6
(22) Anmeldetag: 08.04.2015
(51) Int. Cl.: F16L 33/207

(54) **SCHLAUCHKUPPLUNG**
HOSE COUPLING
RACCORD POUR TUYAU SOUPLE

(30) Priorität: 19.04.2014 DE 202014003383 U; 02.08.2014 DE 102014011583
(43) Veröffentlichungstag der Anmeldung: 21.08.2019
(62) Teilanmeldung aus: 15001002.3
(73) Patentinhaber: Neoperl GmbH, 79379 Müllheim (DE)
(72) Erfinder:
(74) Vertreter: Mertzlufft-Paufler, Cornelius

(56) Entgegenhaltungen:
- WO-A1-2014/139841
- US-A- 4 330 142
- US-A- 5 709 413
- US-A1- 2010 051 131

## Beschreibung

Die Erfindung betrifft eine Schlauchkupplung, die hülsenförmig ausgestaltet ist und die an wenigstens einem Kupplungsende einen Anschlussstutzen mit einer zumindest in einem Stutzen-Teilbereich außenumfangsseitig vorgesehenen Halteprofilierung aufweist, welche durch, am Außenumfang des Anschlussstutzens vorgesehene und auf zumindest einer Umfangslinie angeordnete Haltenuten gebildet ist, die in Stutzen-Umfangsrichtung orientierte Nut-Längsseiten und in Stutzen-Längsrichtung orientierte Nut-Schmalseiten haben, wobei auf das Kupplungsende ein Schlauchende eines flexiblen Schlauches aufschiebbar und dort mittels einer das Schlauchende umspannenden Quetschhülse gehalten ist.

Im Sanitärbereich werden anstelle von dünnen Kupferrohren zunehmend flexible Schlauchleitungen verwendet, um die Wasserzufuhr beispielsweise von einem Eckventil zu einem Handwaschbecken oder dergleichen Wasserverbrauchsstelle zu bewerkstelligen. Um den flexiblen Schlauch mit dem Eckventil oder dergleichen Wasserzuleitung und/oder mit der Wasserverbrauchsstelle zu verbinden, ist eine Schlauchkupplung der eingangs erwähnten Art erforderlich.

Die vorbekannten Schlauchkupplungen sind regelmäßig hülsenförmig ausgebildet und weisen an ihrem einen Ende ein Anschlussgewinde oder eine Überwurfmutter auf, während an dem anderen Kupplungsende ein Anschlussstutzen vorgesehen ist. Dieser Anschlussstutzen weist zumindest in einem Stutzen-Teilbereich außenumfangsseitig eine Halteprofilierung auf, so dass auf dieses profilierte Kupplungsende eines der beiden Schlauchenden eines flexiblen Schlauches aufgeschoben werden kann. Diese Halteprofilierung ist häufig aus wenigstens einem Ringflansch gebildet, der sich zu seinem Außenumfang hin in Richtung zum freien Stutzenende derart verjüngt, dass sich das Schlauchende leicht aufschieben lässt. Nachteilig ist jedoch, dass ein solcher außenumfangsseitig spritz zulaufender Ringflansch wie eine umlaufende Schneidkante wirkt. Wird auf die Schlauchleitung ein Drehmoment ausgeübt und wird der Anschlussstutzen relativ zur Schlauchleitung verdreht, besteht die Gefahr, dass sich der zumindest eine Ringflansch in den Schlauchinnenumfang der Schlauchleitung eingräbt, was mit einer Undichtigkeit oder mit einer reduzierten Berstsicherheit der Schlauchleitung verbunden sein kann.

In der US 4 330 142 A ist in Figur VII eine Schlauchkupplung der eingangs erwähnten Art mit einem Anschlussstutzen dargestellt, der mittels meiselförmiger Prägewerkzeuge geformt wird, die an ihrem Innenumfangquerschnitt kegel- oder kegelstumpfförmige Erhebung haben. Nach dem Einpressen dieser Prägewerkzeuge in das für einen Anschlussstutzen bestimmte hülsenförmige Material bilden sich an diesem Anschlussstutzen umlaufende und in Längsrichtung voneinander beabstandete Haltenuten aus. Auch bei diesem in Figur VII der US 4 330 142 A gezeigten Ausführungsbeispiel steht in jeder der Haltenuten das von den Prägewerkzeugen in die Trennebenen benachbarter Prägewerkzeuge verdrängte Material derart vor, dass es sich weit über den Hülsen-Außenumfang des Anschlussstutzens erhebt.

Da die zwischen benachbarten Nuten vorgesehene Stege in der US 4 330 142 A über den Hülsen-Außenumfang des Anschlussstutzens vorstehen und sich in das elastische Material des auf den Anschlussstutzen aufgeschobenen Schlauches einschneiden, wird ein Relativverdrehen zwischen dem Anschlussstutzen einerseits und dem darauf aufgeschobenen Schlauch andererseits verhindert. Erst durch eine übergroße Kraftanstrengung mag ein solches Relativverdrehen möglich sein, - wobei aber gleichzeitig das Risiko erhöht ist, dass die durch Materialverdrängung gebildeten Stege sich in Umdrehungsrichtung verformen und anschließend einem Relativverdrehen in die entgegengesetzte Drehrichtung erst recht entgegenstehen.

Aus der WO 2014/139841 A1 ist eine Schlauchkupplung mit einer Halteprofilierung vorbekannt, die durch aneinander gereihte Stutzenteilbereiche gebildet ist, welche sich jeweils zum Stutzenende hin verjüngen und der Halteprofilierung am Anschlussstutzen der vorbekannten Schlauchkupplung dadurch eine gestufte Form geben. Bei der aus WO 2014/139841 A1 vorbekannten Schlauchkupplung ist das Schlauchende lediglich mit einer Schlauchschelle auf dem Anschlussstutzen gehalten, sodass diese vorbekannte Schlauchkupplung höheren Belastungen kaum Stand halten kann.

Aus der US 5 709 413 A ist eine Schlauchkupplung mit einem Anschlussstutzen vorbekannt, der an seinem über das Schlauchende der flexiblen Schlauchleitung überstehenden Stutzten-Teilbereich pfeilförmig verjüngt ausgebildet ist. Auf das den Anschlussstutzen umgreifende Schlauchende der flexiblen Schlauchleitung ist eine hülsenförmige Anschlussmutter aufgeschoben, die mit einem Außengewinde in ein Innengewinde eines Kupplungs-Gegenstücks derart einschraubbar ist, dass der pfeilförmig ausgebildete Stutzen-Teilbereich des Anschlussstutzen in eine komplementär geformte Ausnehmung im Kupplungs-Gegenstück gepresst wird. Um das Schlauchende der flexiblen Schlauchleitung auf dem Anschlussstutzen noch zusätzlich zu sichern, weist der Anschlussstutzen der vorbekannten Schlauchkupplung in ihrem vom Schlauchende umgriffenen Teilbereich eine Halteprofilierung auf, die aus umlaufenden Stegen oder in Stutzen-Längsrichtung orientierten Rippen oder Nuten gebildet sein kann. Ein Relativverdrehen zwischen dem Anschlussstutzen und der auf ihn aufgeschobenen Schlauchleitung ist bei dieser vorbekannten Schlauchkupplung nicht vorgesehen, - vielmehr soll beim Verdrehen der zwischen der Anschlussmutter und dem Kupplungs-Gegenstück vorgesehenen Schraubverbindung die Anschlussmutter auf dem Schlauchende der flexiblen Schlauchleitung verdrehen können.

Aus der US 2010/0051131 A1 ist eine Schlauchkupplung mit einem rohrförmigen Anschlussstück vorbekannt, auf den das Schlauchende eines flexiblen Wellschlauches aufgepresst werden kann. An dem vom Schlauchende umgriffenen Teilbereich des Anschlussstückes sind umlaufende Ringwülste vorgesehen, die an die Innenkontur des Wellschlauches angepasst sind. Zumindest einige der Ringwülste sind mit axial verlaufenden Kerben versehen, die einem Relativverdrehen des Wellschlauches auf dem Anschlussstück entgegenwirken sollen.

Es besteht daher die Aufgabe, eine Schlauchkupplung der eingangs erwähnten Art zu schaffen, die auch bei einer Drehbewegung der Schlauchleitung in Relation zum Anschlussstutzen weiterhin eine hohe Dichtigkeit und Belastbarkeit gewährleistet.

Eine erfindungsgemäße Lösung dieser Aufgabe besteht bei der Schlauchkupplung der eingangs erwähnten Art insbesondere darin, dass die Haltenuten jeweils als Einsenkung in dem Stutzen-Außenumfang des Anschlussstutzens ausgbeildet sind, dass der Innenumfang des Schlauchendes an dem die Haltenuten tragenden Außenumfang des Anschlussstutzens anliegt und das elastische Material des flexiblen Schlauches mittels der Quetschhülse in die als Einsenkungen ausgebildeten Haltenuten eingegraben ist, dass die Halteprofilierung zumindest zwei, auf einer gemeinsamen Umfangslinie angeordnete Haltenuten aufweist, deren benachbarte Nuten-Schmalseiten voneinander beanstandet sind und dass die auf einer gemeinsamen Umfangslinie angeordneten Haltenuten einen im Wesentlichen dreieckigen oder viereckigen Stutzenquerschnitt definieren.

Bei der erfindungsgemäßen Schlauchkupplung wird die Halteprofilierung durch Haltenuten gebildet, die am Außenumfang des Anschlussstutzens vorgesehen und auf zumindest einer Umfangslinie angeordnet sind. Die als Einsenkungen am Stutzen-Außenumfang vorgesehenen Haltenuten weisen jeweils in Stutzen-Umfangsrichtung orientierte Nut-Längsseiten und in Stutzen-Längsrichtung orientierte Nut-Schmalseiten auf. Da diese Haltenuten jeweils als Einsenkung in dem Stutzen-Außenumfang des Anschlussstutzens ausgebildet sind, kann der Innenumfang des Schlauchendes an dem die Haltenuten tragenden Außenumfang des Anschlussstutzens anliegen und das elastische Material des flexiblen Schlauches wird mittels der Quetschhülse in die als Einsenkung ausgebildeten Haltenuten eingegraben. In diese Haltenuten wird das innenumfangsseitige elastische Material des flexiblen Schlauches derart verdrängt, dass eine belastbare formschlüssige Verbindung zwischen Anschlussstutzen und dem Schlauchende der flexiblen Schlauchleitung gewährleistet ist. Dabei liegt der Innenumfang des Schlauchendes an dem die Haltenuten tragenden Außenumfang des Anschlussstutzens an. Da auf vorstehende und sich außenumfangsseitig verjüngende Ringflansche verzichtet werden kann, ist ein stabilitätsminderndes Einschneiden des Schlauch-Innenumfangs nicht notwendig. Die erfindungsgemäße Schlauchkupplung zeichnet sich selbst dann durch eine hohe Dichtigkeit, Belastbarkeit und Berstsicherheit aus, wenn die Schlauchleitung in Relation zur Schlauchkupplung verdreht wird. Um die Übertragbarkeit auch hoher Drehmomente auf die zwischen Anschlussstutzen und Schlauchleitung vorgesehene Verbindung noch zu begünstigen, ist des weiteren vorgesehen, dass die Halteprofilierung zumindest zwei, auf einer gemeinsamen Umfangslinie angeordnete Haltenuten aufweist, deren benachbarte Nut-Schmalseiten voneinander beabstandet sind. Da die auf einer gemeinsamen Umfangslinie angeordneten Haltenuten einen im Wesentlichen dreieckigen oder viereckigen Stutzenquerschnitt definieren, ist die zwischen Anschlussstutzen und Schlauchende vorgesehene Verbindung besonders fest und belastbar.

Vorteilhaft ist es, wenn die Halteprofilierung in einem dem Kupplungsende abgewandten Stutzen-Teilbereich angeordnet ist und wenn zwischen dieser Halteprofilierung und dem Kupplungsende wenigstens eine in Stutzen-Umfangsrichtung orientierte Halterippe vorgesehen ist. Auch diese Ausführung der erfindungsgemäßen Schlauchkupplung ist hülsenförmig ausgestaltet und weist an wenigstens einem Kupplungsende einen Anschlussstutzen mit einer Halteprofilierung auf, die zumindest in einem Stutzen-Teilbereich außenumfangsseitig vorgesehen ist. Am Anschlussstutzen der Schlauchkupplung ist an dem dem Kupplungsende abgewandten Stutzen-Teilbereich eine Halteprofilierung vorgesehen, die ebenfalls durch wenigstens eine am Außenumfang des Anschlussstutzens vorgesehene Haltenut gebildet ist, welche in Stutzen-Umfangsrichtung orientierte Nut-Längsseiten und in Stutzen-Längsrichtung orientierte Nut-Schmalseiten hat. Dabei ist zwischen dieser Halteprofilierung und dem Kupplungsende wenigstens eine in Stutzen-Umfangsrichtung orientierte Halterippe vorgesehen. Bei dieser erfindungsgemäßen Schlauchkupplung kann der Anschlussstutzen nun deutlich kürzer ausgebildet werden, was eine enorme Materialersparnis bringt. Dabei vermag die gemäß diesem Erfindungsvorschlag ausgestaltete Schlauchkupplung hohe axiale Haltekräfte auf das auf den Anschlussstutzen aufgeschobene Schlauchende einer flexiblen Schlauchleitung auszuüben und kann gleichzeitig noch die torsionalen Haltekräfte aufnehmen, die zwischen der Schlauchleitung einerseits und der Schlauchkupplung andererseits eventuell zu übertragen sind.

Die an der erfindungsgemäßen Schlauchkupplung vorgesehene, wenigstens eine Halterippe kann in vorzugsweise gleichmäßigen Abständen unterbrochen ausgebildet sein. Um die Herstellung der erfindungsgemäßen Schlauchkupplung zu vereinfachen, ist es jedoch vorteilhaft, wenn die wenigstens eine Halterippe umlaufend ausgebildet ist.

Um in Schlauch-Längsrichtung möglichst hohe axiale Haltekräfte zwischen der erfindungsgemäßen Schlauchkupplung und dem Schlauch übertragen zu können, ist es vorteilhaft, wenn zwischen der Halteprofilierung und dem Kupplungsende wenigstens zwei voneinander beabstandete Halterippen vorgesehen sind.

Um auch ein höheres Drehmoment auf die zwischen dem Anschlussstutzen und dem auf den Anschlussstutzen aufgeschobenen Schlauchende zu gewährleisten, ist es vorteilhaft, wenn die wenigstens eine Haltenut einen Nutgrund hat, der plan, konkav oder konvex ausgestaltet ist. Auf einen derart unrunden Verbindungsbereich zwischen dem Anschlussstutzen einerseits und der auf ihn aufgeschobenen Schlauchleitung andererseits können auch höhere Drehmomente übertragen und abgeführt werden.

Dabei sieht eine besonders einfache und mit vergleichsweise geringem Aufwand herstellbare Ausführungsform gemäß der Erfindung vor, dass die auf einer gemeinsamen Umfangslinie angeordneten Haltenuten in gleichmäßigen Abständen über den Stutzen-Umfang verteilt angeordnet sind.

Die einfache Herstellbarkeit und die hohe Belastbarkeit der mit der erfindungsgemäßen Schlauchkupplung zwischen Anschlussstutzen und Schlauchende vorgesehenen Verbindung ist insbesondere dann besonders fest und belastbar, wenn die auf einer gemeinsamen Umfangslinie angeordneten Haltenuten einen im Wesentlichen dreieckigen, viereckigen, sechseckigen oder mehreckigen Stutzenquerschnitt definieren.

Um die erfindungsgemäße Halteprofilierung an einem möglichst langen Stutzen-Teilbereich vorzusehen, kann es zweckmäßig sein, wenn zumindest in einem Teilbereich des Anschlussstutzens auf wenigstens zwei Umfangslinien angeordnete Haltenuten vorgesehen sind und wenn die einander zugewandten Nut-Längsseiten der auf benachbarten Umfangslinien angeordneten Haltenuten voneinander beabstandet sind.

Dabei sieht eine Ausführungsform gemäß der Erfindung vor, dass die auf benachbarten Umfangslinien angeordneten Haltenuten in achsparallel zur Stutzen-Längsachse angeordneten Linien vorgesehen sind.

Eine demgegenüber andere Ausführungsform gemäß der Erfindung sieht vor, dass die auf benachbarten Umfangslinien angeordneten Haltenuten versetzt zueinander angeordnet sind. Dabei ist es besonders vorteilhaft, wenn die auf benachbarten Umfangslinien angeordneten Haltenuten derart versetzt zueinander angeordnet sind, dass benachbarte Nut-Schmalseiten von auf einer gemeinsamen Umfangslinie angeordneten Haltenuten etwa mittig zu einer auf einer benachbarten Umfangslinie vorgesehenen Haltenut angeordnet sind.

Um das freie Schlauchende auf den erfindungsgemäß ausgebildeten Anschlussstutzen der Schlauchkupplung leicht aufschieben zu können, ist es zweckmäßig, wenn der Anschlussstutzen einen außenumfangsseitig nutfreien Stirnendbereich hat.

Ein leichtes Aufschieben des freien Schlauchendes auf den Anschlussstutzen der erfindungsgemäßen Schlauchkupplung wird begünstigt, wenn der nutfreie Stirnendbereich des Anschlussstutzens als Aufschiebekonus ausgebildet ist und sich dazu zum Stirnende des Anschlussstutzens hin vorzugsweise konisch verjüngt.

Damit der Schlauchinnenumfang besonders gut in die am Anschlussstutzen vorgesehenen und als Halteprofilierung dienenden Haltenuten eingedrückt wird, ist es vorteilhaft, wenn das auf das profilierte Kupplungsende aufgeschobene Schlauchende dort mittels einer das Schlauchende umspannenden Quetschhülse gehalten ist.

Eine bevorzugte Ausführungsform gemäß der Erfindung sieht vor, dass die an die Nut-Längsseiten angrenzenden und/oder die die Nut-Längsseiten der auf benachbarten Umfangslinien angeordneten Haltenuten voneinander trennenden Stutzenabschnitte des Anschlussstutzens rippenartig vorstehen. Eine solche Ausführungsform gemäß der Erfindung bietet den Vorteil, dass eine solche Schlauchkupplung trotz eines vergleichsweise kurzen Anschlussstutzens dennoch die gleichen axialen Haltekräfte für den Schlauch bietet und die gleichzeitig auch die torsionalen Haltekräfte aufzunehmen vermag. Bei dieser Ausführungsform sind die in Stutzen-Längsrichtung in etwa einer Linie angeordneten und praktisch eine 4-Kant-Fläche bildenden Haltenuten durch eine umlaufende oder eine umlaufend unterbrochene Rippe voneinander beabstandet, die mit dazu beiträgt, die axiale Fixierung zwischen dem Schlauch und dem Anschlussstutzen trotz der kürzeren Baulänge und dem damit geringeren Platz für weitere umlaufende Halterippen sicherzustellen.

Weiterbildungen gemäß der Erfindung ergeben sich aus den Ansprüchen in Verbindung mit den Figuren sowie der Beschreibung. Nachstehend wird die Erfindung anhand bevorzugter Ausführungsbeispiele noch näher beschrieben.

Es zeigt:
- Fig. 1: eine perspektivisch dargestellte Schlauchkupplung, die einen Anschlussstutzen hat, der zumindest in einem Stutzen-Teilbereich außenumfangsseitig eine Halteprofilierung aufweist, welche Halteprofilierung durch eine Vielzahl von Haltenuten gebildet ist,
- Fig. 2: eine gemäß Figur 1 ausgebildete Schlauchkupplung in einem Längsschnitt, auf deren Anschlussstutzen ein Schlauchende einer flexiblen Schlauchleitung aufgeschoben ist, wobei das Schlauchende auf dem Anschlussstutzen mittels einer Quetschhülse gehalten ist, die das Schlauchende im Bereich des profilierten Kupplungsendes umspannt,
- Fig. 3: die Schlauchkupplung aus Figur 2 in einem in Umfangsrichtung geringfügig gedrehten Längsschnitt,
- Fig. 4: die bereits in Figur 2 und 3 gezeigte Schlauchkupplung mit dem von der Quetschhülse umspannten Schlauchende in einem Längsschnitt,
- Fig. 5: die Schlauchkupplung aus den Figuren 2 bis 4 in einem Querschnitt durch Schnittebene V-V,
- Fig. 6: den Anschlussstutzen einer Schlauchkupplung in einem Teil-Längsschnitt, wobei der Anschlussstutzen eine Vielzahl von Haltenuten trägt, die auf benachbarten Umfangslinien in achsparallel zur Stutzen-Längsachse angeordneten Linien vorgesehen sind,
- Fig. 7: einen schematisch dargestellten Querschnitt durch den Anschlussstutzen gemäß Figur 6, wobei die Schnittlinie des in Figur 6 gezeigten Teil-Längsschnittes verdeutlicht wird,
- Fig. 8: den Anschlussstutzen aus Figur 6 und 7 in einer Seitenansicht,
- Fig. 9: den Anschlussstutzen aus Figur 6 bis 8 in einer perspektivischen Seitenansicht mit Blick auf das freie Stutzenende dieses Anschlussstutzens,
- Fig. 10: einen Anschlussstutzen mit einer, aus einer Vielzahl von Haltenuten angeordneten Halteprofilierung, wobei diese auf benachbarten Umfangslinien angeordneten Haltenuten versetzt zueinander angeordnet sind,
- Fig. 11: den Anschlussstutzen aus Figur 10 in einer perspektivischen Unteransicht auf das freie Stutzenende,
- Fig. 12: eine weitere erfindungsgemäße Ausführungsform einer Schlauchkupplung in einer perspektivischen Darstellung mit Blick auf den zum Aufschieben eines flexiblen Schlauches bestimmten Anschlussstutzen,
- Fig. 13: die Schlauchkupplung aus Figur 12 in einer vergleichbaren perspektivischen Seitenansicht,
- Fig. 14: die Schlauchkupplung aus den Figuren 12 und 13 in einem Längsschnitt, wobei in diesem Längsschnitt auch die auf dem Anschlussstutzen vorgesehenen Haltenuten einer Halteprofilierung mit angeschnitten sind,
- Fig. 15: die Schlauchkupplung aus den Figuren 12 bis 14 in einer perspektivischen Seitenansicht mit Blick auf das im Vergleich zu Figur 13 andere Kupplungsende,
- Fig. 16: die Schlauchkupplung aus den Figuren 12 bis 15 in einem Längsschnitt, wobei der die Halteprofilierung aufweisende Stutzen-Teilbereich hier so angeschnitten ist, dass die Schnittebene zwischen den Haltenuten liegt,
- Fig. 17: die Schlauchkupplung aus den Figuren 12 bis 16 in einer Seitenansicht, wobei auf den Anschlussstutzen dieser Schlauchkupplung hier ein Schlauchende einer flexiblen Schlauchleitung aufgeschoben ist, und wobei die Schlauchkupplung die Durchstecköffnung einer Überwurfmutter durchsetzt, mit welcher Überwurfmutter die Schlauchkupplung an dem benachbarten Anschlussstück einer hier nicht weiter gezeigten Schlauchleitung befestigbar ist,
- Fig. 18: die mit dem Schlauchende eines flexiblen Schlauches verbundene Schlauchkupplung aus den Figuren 12 bis 17 in einem Querschnitt durch die Schnittebene XXI-XXI aus Figur 17,
- Fig. 19: die Schlauchkupplung aus den Figuren 12 bis 18 in einem Längsschnitt, wobei in diesem Längsschnitt auch die Haltenuten einer Halteprofilierung mit angeschnitten sind, und
- Fig. 20: die Schlauchkupplung aus den Figuren 12 bis 19 in einem gegenüber Figur 19 um 45° gedrehten Längsschnitt.

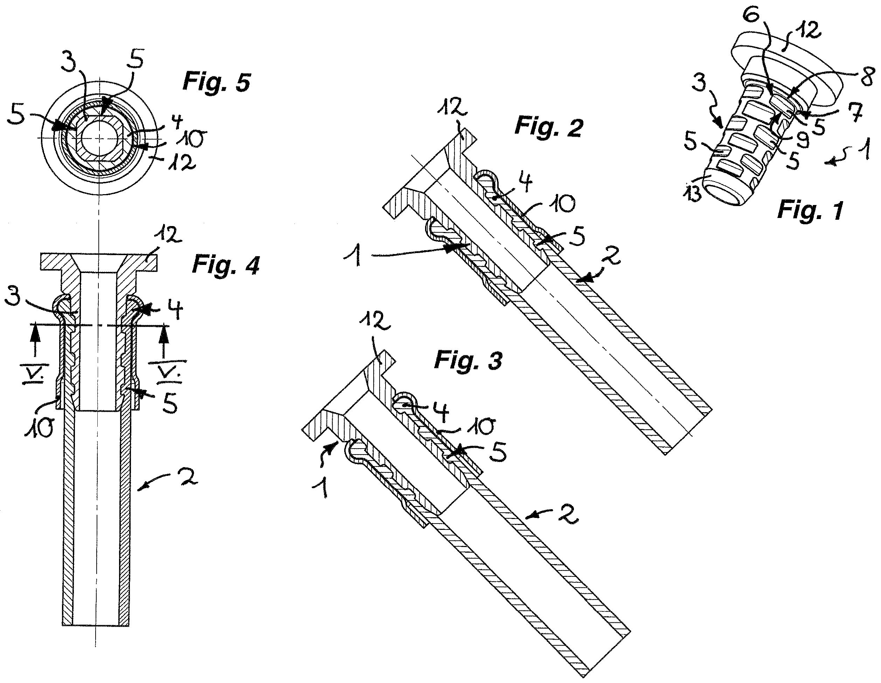

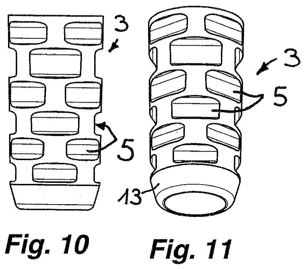

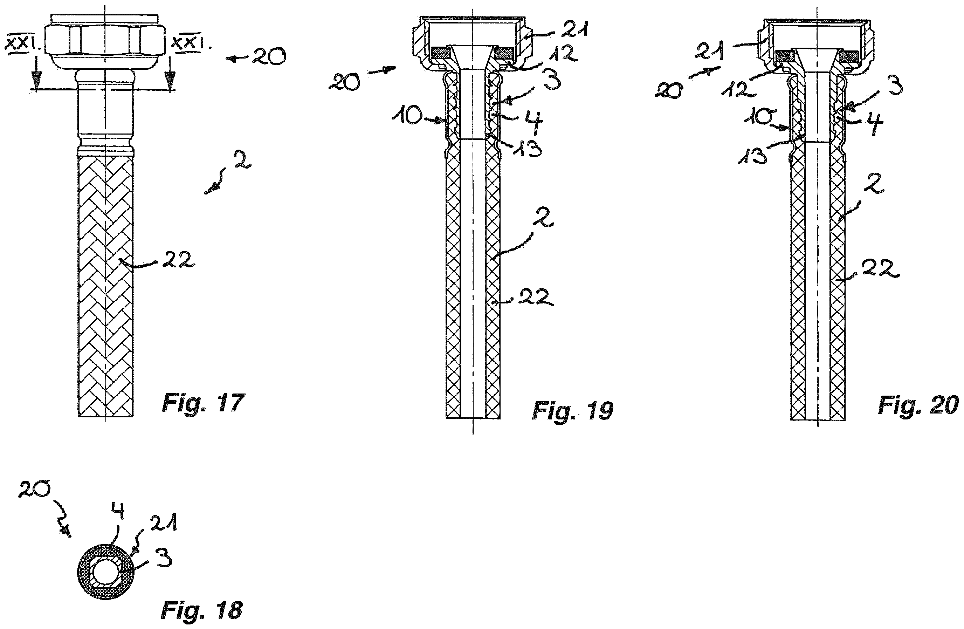

In den Figuren 1 bis 20 sind verschiedene Ausführungen 1, 20 einer Schlauchkupplung dargestellt, die zum Anschluss eines flexiblen Schlauches 2 beispielsweise an einem Eckventil oder an einer sanitären Auslaufarmatur oder dergleichen Wasserverbrauchsstelle dient. Die Schlauchkupplung 1, 20 die hülsenförmig ausgestaltet ist, weist an wenigstens einem Kupplungsende einen Anschlussstutzen 3 auf, der zumindest in einem Stutzen-Teilbereich außenumfangsseitig eine Halteprofilierung trägt.

Wie in den Figuren 2 bis 5 und 17 bis 20 erkennbar ist, ist auf das zumindest eine profilierte Kupplungsende ein Schlauchende 4 des flexiblen Schlauches 2 aufschiebbar. Die am Anschlussstutzen 3 der Schlauchkupplung 1 vorgesehene Halteprofilierung wird durch wenigstens eine und vorzugsweise - wie hier - durch eine Mehrzahl von Haltenuten 5 gebildet, die am Außenumfang des Anschlussstutzens 3 vorgesehen sind. Jede dieser, als Einsenkung in den Stutzen-Außenumfang ausgebildeten Haltenuten 5 weist in Stutzen-Längsrichtung orientierte Nut-Schmalseiten 6, 7 und in Stutzen-Umfangsrichtung orientierte Nut-Längsseiten 8, 9 auf.

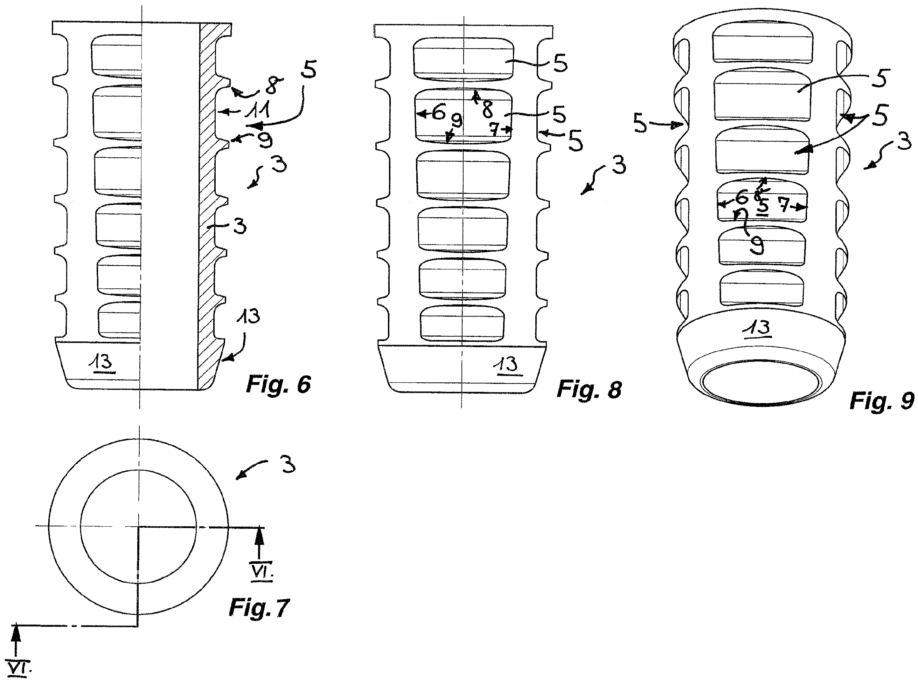

Jeweils eine Teilmenge der Haltenuten 5 ist auf einer gemeinsamen Stutzen-Umfangslinie angeordnet. Dabei sind die benachbarten Nut-Schmalseiten 6, 7 einander angrenzender Haltenuten 5 voneinander beabstandet. Bei dem in Figur 6 bis 9 und 12 bis 20 gezeigten Anschlussstutzen definieren die auf einer der Umfangslinien angeordneten Haltenuten 5 einen viereckigen Stutzenquerschnitt. In den Figuren 6 bis 9 und 12 bis 20 ist erkennbar, dass die auf benachbarten Umfangslinien angeordneten Haltenuten 5 in achsparallel zur Stutzen-Längsachse angeordneten Linien vorgesehen sein können. Demgegenüber ist aus den Figuren 1 und 10 bis 11 erkennbar, dass die auf benachbarten Umfangslinien angeordneten Haltenuten 5 auch derart versetzt zueinander angeordnet sein können, dass benachbarte Nut-Schmalseiten 6, 7 von auf einer gemeinsamen Umfangslinie angeordneten Haltenuten 5 etwa mittig zu einer auf einer benachbarten Umfangslinie vorgesehenen Haltenut 5 angeordnet sind.

In den Figuren 1, 6 und 8 bis 20 ist erkennbar, dass der Anschlussstutzen 3 einen außenumfangsseitig nutfreien Stirnendbereich 13 aufweisen kann. Um das Schlauchende 4 des flexiblen Schlauches 2 leicht und mit geringem Aufwand auf den Anschlussstutzen 3 aufschieben zu können, ist es vorteilhaft, wenn der nutfreie Stirnendbereich 13 als Aufschiebekonus ausgebildet ist und dazu sich zum Stirnende hin vorzugsweise konisch verjüngt. Damit das elastische Material des flexiblen Schlauches 2 sich gut in die als Halteprofilierung dienenden Haltenuten 5 eingraben kann, ist eine Quetschhülse 10 vorgesehen, die das auf das profilierte Kupplungsende aufgeschobene Schlauchende 4 des Schlauches 2 umspannt. Diese Quetschhülse 10 ist von einer hier nicht weiter gezeigten erweiterten Ausgangsstellung in die in den Figuren 2 bis 4 gezeigte Halteposition verringerten Querschnitts verformbar oder umformbar. Die Schlauchkupplung 1 kann an ihrem den Anschlussstutzen 3 abgewandten Kupplungsende ein Anschlussgewinde tragen. Die hier dargestellten Schlauchkupplungen 1 weisen demgegenüber an ihrem den Anschlussstutzen 3 abgewandten Kupplungsende einen Ringflansch 12 auf, der von einer hier nicht weiter gezeigten Überwurfmutter hintergriffen wird und deren Durchstecköffnung der Anschlussstutzen 3 durchsetzt. Um die freien Schlauchenden zweier benachbarter flexibler Schlauchleitungen miteinander verbinden zu können, kann die Schlauchkupplung auch an ihren beiden Kupplungsenden jeweils einen Anschlussstutzen aufweisen.

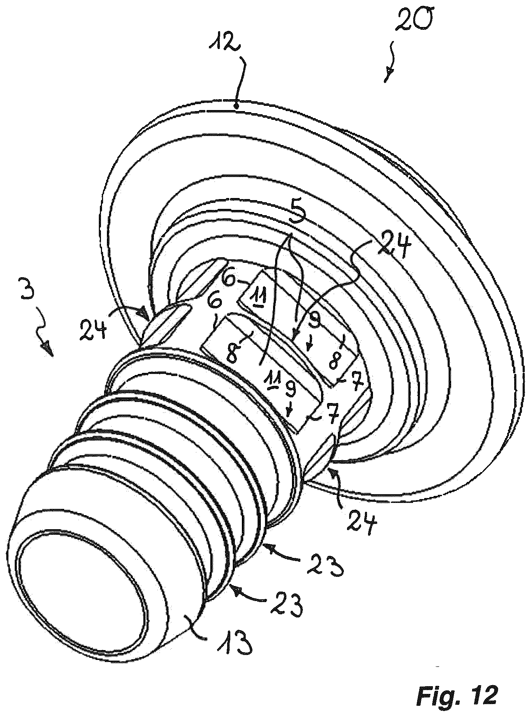

In den Figuren 12 bis 20 ist eine Schlauchkupplung 20 dargestellt, die ebenfalls zum Anschluss eines flexiblen Schlauches 2 beispielsweise an einem Eckventil oder an einer sanitären Auslaufarmatur oder dergleichen Wasserverbrauchsstelle dient. Die Schlauchkupplung 20 weist auch hier einen radial vorstehenden umlaufenden Ringflansch 12 auf. Auf die Schlauchkupplung 20 ist von dem das Schlauchende tragenden Kupplungsende aus eine Überwurfmutter 21 aufgesteckt, deren die Durchstecköffnung der Überwurfmutter 21 begrenzender Öffnungsrand mit dem Ringflansch 12 zusammenwirkt.

Die Schlauchkupplung 20, die hier ebenfalls hülsenförmig ausgestaltet ist, weist an ihrem einen, dem Schlauch 2 zugewandten Kupplungsende einen Anschlussstutzen 3 mit einer Halteprofilierung auf, die hier außenumfangsseitig in einem dem nutfreien Stirnendbereich 13 abgewandten Stutzen-Teilbereich vorgesehen ist.

Auf den das eine Kupplungsende bildenden nutfreien Stirnendbereich der Schlauchkupplung 20 ist das Schlauchende 4 des hier eine außenumfangsseitige Metallumflechtung 22 aufweisenden Schlauches 2 geschoben. Der nutfreie Stirnendbereich 13 des Anschlussstutzens 3 ist dazu als Aufschiebekonus ausgebildet und verjüngt sich zum Stirnende hin vorzugsweise konisch.

Die in dem dem Kupplungsende abgewandten Stutzen-Teilbereich vorgesehene Halteprofilierung wird durch wenigstens eine, als Einsenkung im Anschlussstutzen ausgestaltete Haltenut 5 gebildet, die am Außenumfang des Anschlussstutzens 3 vorgesehen ist und die in Stutzen-Umfangsrichtung orientierte Nut-Längsseiten 8, 9 und in Stutzen-Längsrichtung orientierte Nut-Schmalseiten 6, 7 hat. Zwischen dieser, durch die Haltenuten 5 gebildeten Halteprofilierung und dem Kupplungsende ist wenigstens eine in Stutzen-Umfangsrichtung orientierte Halterippe 23 vorgesehen. Bei dem in den Figuren 12 bis 20 gezeigten Ausführungsbeispiel sind zwischen der Halteprofilierung und dem Kupplungsende zwei voneinander beabstandete Halterippen 23 angeordnet. Diese Halterippen 23 sind hier umlaufend um den Anschlussstutzen 3 herum ausgestaltet.

In den Figuren 12, 13 und 15 ist erkennbar, dass die Haltenuten 5 an dem Anschlussstutzen 3 der Schlauchkupplung 20 einen Nutgrund haben, der hier plan ausgestaltet ist, aber auch konkav oder konvex ausgebildet sein könnte. Die in dem Stutzen-Teilbereich der Schlauchkupplung 20 vorgesehene Halteprofilierung weist hier zumindest zwei und insbesondere vier Haltenuten 5 auf, die jeweils etwa auf einer gemeinsamen Umfangslinie angeordnet sind. Dabei sind die auf einer gemeinsamen Umfangslinie angeordneten Haltenuten 5 in gleichmäßigen Abständen über den Stutzen-Umfang des Anschlussstutzens 3 verteilt angeordnet. Der Stutzen-Teilbereich weist hier eine Mehrzahl von, auf wenigstens zwei Umfangslinien angeordnete Haltenuten 5 auf, wobei die einander zugewandten Nut-Längsseiten der auf den benachbarten Umfangslinien angeordneten Haltenuten voneinander beabstandet sind. Dabei sind die auf den benachbarten Umfangslinien angeordneten Haltenuten in achsparallel zur Stutzen-Längsachse angeordneten Linien vorgesehen. Die derart zueinander positionierten Haltenuten 5 definieren einen im Wesentlichen viereckigen Stutzenquerschnitt des Anschlussstutzens in dem profilierten Stutzen-Teilbereich. In den Figuren 12, 13 und 15 ist gut erkennbar, dass der die Nut-Längsseiten der auf benachbarten Umfangslinien angeordneten Haltenuten 5 voneinander trennende Stutzen-Abschnitt 24 des Anschlussstutzens 3 rippenartig vorsteht. Dabei können sich diese rippenartig vorstehenden Stutzenabschnitte 24 auch radial nach außen hin verjüngen, um sich - ebenso wie die Halterippen 23 - besonders gut innenumfangsseitig im Schlauchinneren des Schlauches 2 zu verkrallen.

### Bezugszeichenliste

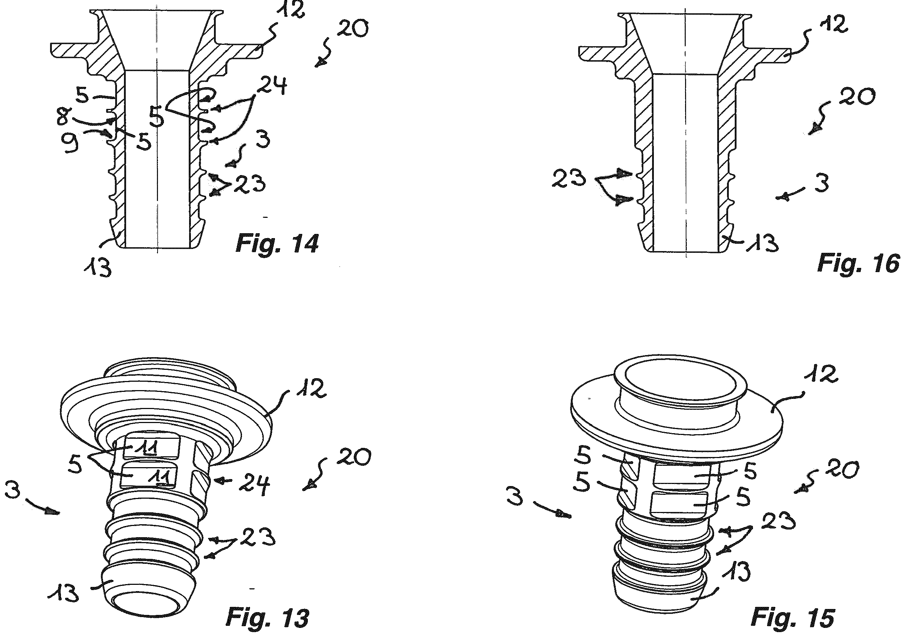

- 1: Schlauchkupplung
- 2: Schlauch
- 3: Anschlussstutzen
- 4: Schlauchende
- 5: Haltenut
- 6: Nut-Schmalseite
- 7: Nut-Schmalseite
- 8: Nut-Längsseite
- 9: Nut-Längsseite
- 10: Quetschhülse
- 11: Nutgrund
- 12: Ringflansch
- 13: nutfreier Stirnendbereich
- 20: Schlauchkupplung (gemäß den Figuren 16 bis 24)
- 21: Überwurfmutter
- 22: Metallumflechtung
- 23: Halterippen
- 24: Stutzenabschnitt (zwischen den in Stutzen-Längsrichtung voneinander beabstandeten benachbarten Haltenuten 5)

## Patentansprüche

1. Schlauchkupplung (1), die hülsenförmig ausgestaltet ist und die an wenigstens einem Kupplungsende einen Anschlussstutzen (3) mit einer zumindest in einem Stutzen-Teilbereich außenumfangsseitig vorgesehenen Halteprofilierung aufweist, welche durch, am Außenumfang des Anschlussstutzens (3) vorgesehene und auf zumindest einer Umfangslinie angeordnete Haltenuten (5) gebildet ist, die in Stutzen-Umfangsrichtung orientierte Nut-Längsseiten (8, 9) und in Stutzen-Längsrichtung orientierte Nut-Schmalseiten (6, 7) haben, wobei auf das Kupplungsende ein Schlauchende (4) eines flexiblen Schlauches (2) aufschiebbar und dort mittels einer das Schlauchende (4) umspannenden Quetschhülse (10) gehalten werden kann,
**dadurch**
**gekennzeichnet, dass** die Haltenuten (5) jeweils als Einsenkung in dem Stutzen-Außenumfang des Anschlussstutzens (3) ausgebildet sind, dass der Innenumfang des Schlauchendes (4) an dem die Haltenuten (5) tragenden Außenumfang des Anschlussstutzens (3) anliegen kann
und das elastische Material des flexiblen Schlauches (2) mittels der Quetschhülse (10) in die als Einsenkungen ausgebildeten Haltenuten (5) eingegraben werden kann,
dass die Halteprofilierung zumindest zwei, auf einer gemeinsamen Umfangslinie angeordnete Haltenuten (5) aufweist, deren benachbarten Nut-Schmalseiten (6, 7) voneinander beabstandet sind und dass die auf einer gemeinsamen Umfangslinie angeordneten Haltenuten (5) einen im Wesentlichen dreieckigen oder viereckigen Stutzenquerschnitt definieren.

2. Schlauchkupplung nach Anspruch 1, **dadurch gekennzeichnet, dass** die Halteprofilierung in einem dem Kupplungsende abgewandten Stutzen-Teilbereich des Anschlussstutzens (3) vorgesehen ist, und dass zwischen dieser Halteprofilierung und dem Kupplungsende wenigstens eine in Stutzen-Umfangsrichtung orientierte Halterippe (23) vorgesehen ist.

3. Schlauchkupplung nach Anspruch 2, **dadurch gekennzeichnet, dass** die wenigstens eine Halterippe (23) umlaufend oder in vorzugsweise gleichmäßigen Abständen unterbrochen ausgebildet ist.

4. Schlauchkupplung nach Anspruch 2 oder 3, **dadurch gekennzeichnet, dass** zwischen der Halteprofilierung und dem Kupplungsende wenigstens zwei voneinander beabstandete Halterippen (23) vorgesehen sind.

5. Schlauchkupplung nach einem der Ansprüche 1 bis 4, **dadurch gekennzeichnet, dass** die wenigstens eine Haltenut (5) einen Nutgrund (11) hat, der plan, konkav oder konvex ausgestaltet ist.

6. Schlauchkupplung nach einem der Ansprüche 1 bis 5, **dadurch gekennzeichnet, dass** die auf einer gemeinsamen Umfangslinie angeordneten Haltenuten (5) in gleichmäßigen Abständen über den Stutzen-Umfang verteilt angeordnet sind.

7. Schlauchkupplung nach einem der Ansprüche 1 bis 6, **dadurch gekennzeichnet, dass** zumindest in einem Teilbereich des Anschlussstutzens (3) auf wenigstens zwei Umfangslinien angeordnete Haltenuten (5) vorgesehen sind und dass die einander zugewandten Nut-Längsseiten (8, 9) der auf benachbarten Umfangslinien angeordneten Haltenuten (5) voneinander beabstandet sind.

8. Schlauchkupplung nach einem der Ansprüche 4 bis 7, **dadurch gekennzeichnet, dass** die auf benachbarten Umfangslinien angeordneten Haltenuten (5) in achsparallel zur Stutzen-Längsachse angeordneten Linien vorgesehen sind.

9. Schlauchkupplung nach einem der Ansprüche 4 bis 7, **dadurch gekennzeichnet, dass** die auf benachbarten Umfangslinien angeordneten Haltenuten (5) versetzt zueinander angeordnet sind.

10. Schlauchkupplung nach Anspruch 9, **dadurch gekennzeichnet, dass** die auf benachbarten Umfangslinien angeordneten Haltenuten (5) derart versetzt zueinander angeordnet sind, dass benachbarte Nut-Schmalseiten (6, 7) von auf einer gemeinsamen Umfangslinie angeordneten Haltenuten (5) etwa mittig zu einer auf einer benachbarten Umfangslinie vorgesehenen Haltenut (5) angeordnet sind.

11. Schlauchkupplung nach einem der Ansprüche 1 bis 10, **dadurch gekennzeichnet, dass** der Anschlussstutzen einen außenumfangsseitig nutfreien Stirnendbereich (13) hat.

12. Schlauchkupplung nach Anspruch 11, **dadurch gekennzeichnet, dass** der nutfreie Stirnendbereich (13) des Anschlussstutzens (3) als Aufschiebekonus ausgebildet ist und sich dazu zum Stirnende hin vorzugsweise konisch verjüngt.

13. Schlauchkupplung nach einem der Ansprüche 1 bis 12, **dadurch gekennzeichnet, dass** das auf das profiliertes Kupplungsende aufgeschobene Schlauchende (4) dort mittels einer das Schlauchende (4) umspannenden Quetschhülse (10) gehalten ist.

14. Schlauchkupplung nach einem der Ansprüche 1 bis 13, **dadurch gekennzeichnet, dass** die an die Nut-Längsseiten (8, 9) angrenzenden und/oder die die Nut-Längsseiten (8, 9) der auf benachbarten Umfangslinien angeordneten Haltenuten (5) voneinander trennende Stutzenabschnitte (24) des Anschlussstutzens (3) rippenartig nach außen vorstehen und sich radial nach außen vorzugsweise verjüngen.

## Claims

1. Hose coupling (1) which is of sleeve-shaped form and which, at at least one coupling end, has a connector (3) with a retention profiling which is provided on the outer circumference at least in one connector subregion and which is formed by retention grooves (5) which are provided on the outer circumference of the connector (3) and which are arranged on at least one circumferential line, which retention grooves have groove long sides (8, 9) oriented in the connector circumferential direction and groove narrow sides (6, 7) oriented in the connector longitudinal direction, wherein a hose end (4) of a flexible hose (2) can be pushed onto the coupling end and can be retained thereon by means of a crimp sleeve (10) which encompasses the hose end (4), **characterized in that** the retention grooves (5) are formed in each case as a recess in the connector outer circumference of the connector (3), **in that** the inner circumference of the hose end (4) can lie against the outer circumference of the connector (3) bearing the retention grooves (5) and the elastic material of the flexible hose (2) can be embedded, by means of the crimp sleeve (10), into the retention grooves (5) formed as recesses, **in that** the retention profiling has at least two retention grooves (5) which are arranged on a common circumferential line and the adjacent groove narrow sides (6, 7) of which are spaced apart from one another, and **in that** the retention grooves (5) arranged on a common circumferential line define a substantially triangular or square connector cross section.

2. Hose coupling according to Claim 1, **characterized in that** the retention profiling is provided in a connector subregion of the connector (3), which connector subregion faces away from the coupling end, and **in that** at least one retention rib (23) oriented in the connector circumferential direction is provided between said retention profiling and the coupling end.

3. Hose coupling according to Claim 2, **characterized in that** the at least one retention rib (23) is of encircling form, or has interruptions at preferably uniform intervals.

4. Hose coupling according to Claim 2 or 3, **characterized in that** at least two retention ribs (23) which are spaced apart from one another are provided between the retention profiling and the coupling end.

5. Hose coupling according to one of Claims 1 to 4, **characterized in that** the at least one retention groove (5) has a groove base (11) which is of flat, concave or convex form.

6. Hose coupling according to one of Claims 1 to 5, **characterized in that** the retention grooves (5) arranged on a common circumferential line are arranged so as to be distributed over the connector circumference at uniform intervals.

7. Hose coupling according to one of Claims 1 to 6, **characterized in that**, in at least one subregion of the connector (3), retention grooves (5) are provided so as to be arranged on at least two circumferential lines, and **in that** the groove long sides (8, 9), which face towards one another, of the retention grooves (5) arranged on adjacent circumferential lines are spaced apart from one another.

8. Hose coupling according to one of Claims 4 to 7, **characterized in that** the retention grooves (5) arranged on adjacent circumferential lines are provided in lines which are arranged so as to be axially parallel to the connector longitudinal axis.

9. Hose coupling according to one of Claims 4 to 7, **characterized in that** the retention grooves (5) arranged on adjacent circumferential lines are arranged offset with respect to one another.

10. Hose coupling according to Claim 9, **characterized in that** the retention grooves (5) arranged on adjacent circumferential lines are arranged offset with respect to one another such that adjacent groove narrow sides (6, 7) of retention grooves (5) arranged on a common circumferential line are arranged approximately centrally with respect to a retention groove (5) provided on an adjacent circumferential line.

11. Hose coupling according to one of Claims 1 to 10, **characterized in that** the connector has a groove-free face end region (13) on the outer circumference.

12. Hose coupling according to Claim 11, **characterized in that** the groove-free face end region (13) of the connector (3) is in the form of a push-on cone and, for this purpose, tapers in preferably conical fashion towards the face end.

13. Hose coupling according to one of Claims 1 to 12, **characterized in that** the hose end (4) that has been pushed onto the profiled coupling end is retained thereon by means of a crimp sleeve (10) which encompasses the hose end (4).

14. Hose coupling according to one of Claims 1 to 13, **characterized in that** the connector sections (24) of the connector (3) which adjoin the groove long sides (8, 9) and/or separate the groove long sides (8, 9) of the retention grooves (5) arranged on adjacent circumferential lines from one another project outwards in the manner of ribs and preferably taper in the radially outward direction.

## Revendications

1. Coupleur de tuyau (1) qui est configuré en forme de manchon et qui présente, à au moins une extrémité de couplage, un embout de raccordement (3) avec un profil de maintien prévu sur la périphérie extérieure d'une zone partielle d'embout, lequel est constitué par des rainures de maintien (5) prévues sur la périphérie extérieure de l'embout de raccordement (3) et disposées sur au moins une ligne périphérique, qui ont des faces longitudinales de rainure (8, 9) orientées dans la direction périphérique de l'embout et des faces étroites de rainure (6, 7) orientées dans la direction longitudinale de l'embout, une extrémité de tuyau (4) d'un tuyau flexible (2) pouvant être maintenue de façon coulissante sur l'extrémité de couplage au moyen d'une douille de sertissage (10) enserrant l'extrémité de tuyau (4), **caractérisé en ce que** les rainures de maintien (5) sont configurées chacune comme un renfoncement dans la périphérie extérieure d'embout de l'embout de raccordement (3), que la périphérie intérieure de l'extrémité de tuyau (4) peut s'appliquer contre la périphérie extérieure de l'embout de raccordement (3) portant les rainures de maintien (5) et le matériau élastique du tuyau flexible (2) peut être inséré au moyen de la douille de sertissage (10) dans les rainures de maintien (5) configurées comme des enfoncements, que le profil de maintien présente au moins deux rainures de maintien (5) disposées sur une ligne périphérique commune dont les faces étroites de rainure (6, 7) voisines sont espacées l'une de l'autre et que les rainures de maintien (5) disposées sur une ligne périphérique commune définissent une section transversale d'embout sensiblement triangulaire ou quadrangulaire.

2. Coupleur de tuyau selon la revendication 1, **caractérisé en ce que** le profil de maintien est prévu dans une zone partielle d'embout de l'embout de raccordement (3) opposée à l'extrémité de couplage et qu'entre ce profil de maintien et l'extrémité de couplage est prévue une nervure de maintien (23) orientée dans la direction périphérique de l'embout.

3. Coupleur de tuyau selon la revendication 2, **caractérisé en ce que** l'au moins une nervure de maintien (23) est configurée de façon circulaire ou interrompue de préférence à intervalles réguliers.

4. Coupleur de tuyau selon la revendication 2 ou 3, **caractérisé en ce qu'**entre le profil de maintien et l'extrémité de couplage sont prévues au moins deux nervures de maintien (23) espacées l'une de l'autre.

5. Coupleur de tuyau selon une des revendications 1 à 4, **caractérisé en ce que** l'au moins une rainure de maintien (5) a un fond de rainure (11) qui est configuré de façon plane, concave ou convexe.

6. Coupleur de tuyau selon une des revendications 1 à 5, **caractérisé en ce que** les rainures de maintien (5) disposées sur une ligne périphérique commune sont réparties à distances régulières sur la périphérie de l'embout.

7. Coupleur de tuyau selon une des revendications 1 à 6, **caractérisé en ce qu'**au moins dans une zone partielle de l'embout de raccordement (3) sont prévues des rainures de maintien (5) disposées sur au moins deux lignes périphériques et que les faces longitudinales de rainure (8, 9) orientées l'une vers l'autre des rainures de maintien (5) disposées sur des lignes périphériques voisines sont espacées l'une de l'autre.

8. Coupleur de tuyau selon une des revendications 4 à 7, **caractérisé en ce que** les rainures de maintien (5) disposées sur des lignes périphériques voisines sont prévues dans des lignes disposées avec leur axe parallèle à l'axe longitudinal de l'embout.

9. Coupleur de tuyau selon une des revendications 4 à 7, **caractérisé en ce que** les rainures de maintien (5) disposées sur des lignes périphériques voisines sont disposées avec un décalage entre elles.

10. Coupleur de tuyau selon la revendication 9, **caractérisé en ce que** les rainures de maintien (5) disposées sur des lignes périphériques voisines sont disposées avec un décalage entre elles, de sorte que des faces étroites de rainure (6, 7) voisines de rainures de maintien (5) disposées sur une ligne périphérique commune sont disposées sensiblement au milieu d'une rainure de maintien (5) prévue sur une ligne périphérique voisine.

11. Coupleur de tuyau selon une des revendications 1 à 10, **caractérisé en ce que** l'embout de raccordement a une zone d'extrémité frontale (13) sans rainure sur la face périphérique extérieure.

12. Coupleur de tuyau selon la revendication 11, **caractérisé en ce que** la zone d'extrémité frontale sans rainure (13) de l'embout de raccordement (3) est configurée comme un cône d'enfilage et se rétrécit pour cela en direction de l'extrémité frontale, de préférence de façon conique.

13. Coupleur de tuyau selon une des revendications 1 à 12, **caractérisé en ce que** l'extrémité de tuyau (4) enfilée sur l'extrémité de couplage profilée est maintenue en place au moyen d'une douille de sertissage (10) enserrant l'extrémité de tuyau (4).

14. Coupleur de tuyau selon une des revendications 1 à 13, **caractérisé en ce que** les sections d'embout (24) de l'embout de raccordement (3) délimitant les faces longitudinales de rainure (8, 9) et/ou séparant entre elles les faces longitudinales de rainure (8, 9) des rainures de maintien (5) disposées sur des lignes périphériques voisines saillent vers l'extérieur à la manière de nervures et se rétrécissent de préférence de façon radiale vers l'extérieur.
